# EUROPEAN PATENT SPECIFICATION

(11) **EP 3 079 085 B1**
(45) Date of publication and mention of the grant of the patent: **15.11.2017**
(21) Application number: 16168846.0
(22) Date of filing: 15.05.2006
(51) Int. Cl.: G06F 17/30, H04L 29/08

(54) **INFORMATION SEARCH DEPENDENT ON THE POSITION AND DIRECTION OF A PORTABLE ELECTRONIC DEVICE**
INFORMATIONSSUCHE IN ABHÄNGIGKEIT VON DER POSITION UND DER RICHTUNG EINER TRAGBAREN ELEKTRONISCHEN VORRICHTUNG
RECHERCHE D'INFORMATIONS DÉPENDANT DE LA POSITION ET LA DIRECTION D'UN DISPOSITIF ÉLECTRONIQUE PORTABLE

(43) Date of publication of application: 12.10.2016
(62) Divisional of application: 06113950.7
(73) Proprietor: BlackBerry Limited, Waterloo, ON N2K 0A7 (CA)
(72) Inventor: BLOMMESTEIJN, Nicholas, Ottawa, Ontario K2A 1Z1 (CA)
(74) Representative: Hanna Moore + Curley

(56) References cited:
- US-A1- 2002 103 911
- US-A1- 2003 040 324
- US-B1- 6 496 776

## Description

### FIELD

The present disclosure relates to a portable electronic device, in particular, a method for sorting and displaying data on the portable electronic device.

### BACKGROUND

It is becoming increasingly common to use resources available through the Internet to search for phone numbers, directions or other information that is associated with a geographical location. Websites such as canada411™, 411.ca™, MapQuest™ and Google™, for example, are very popular and many other websites offering similar services are also available.

The number of searchable fields on most websites is quite limited, however, and in some cases performing a search using a website may not be much quicker than performing a manual search using a telephone directory or a map. For example, when searching for a person or business having a common name, multiple pages of results must be viewed before the correct person or business is located. Similarly, using online maps can be quite slow particularly if a user has limited information about their desired location.

Examples of published patent documents relating to the above include US2002/103911 which discloses a server apparatus, a method, a charge processing apparatus and charging method in relation to space information service, and US6496776, which describes apposition-based information access device and method.

### SUMMARY

The present application provides a method of providing search results in accordance with claim 1 which follows.

Optional features are set forth in the dependent claims.

### BRIEF DESCRIPTION OF THE DRAWINGS

The embodiments will be better understood with reference to the following Figures in which like numerals denote like parts and in which:
Figure 1 is a functional block diagram of a communication system for a portable electronic device according to an embodiment;
Figure 2 is a functional block diagram of certain components the portable electronic device of Figure 1;
Figure 3 is a flowchart showing operation of an embodiment of a sorting system for the portable electronic device of Figure 2;
Figure 4 is a schematic overhead view of the portable electronic device of Figure 2;
Figure 5 is a front view of the portable electronic device of Figure 2; and
Figure 6 is a flowchart showing operation of another embodiment of a sorting system for the portable electronic device of Figure 2.

### DETAILED DESCRIPTION

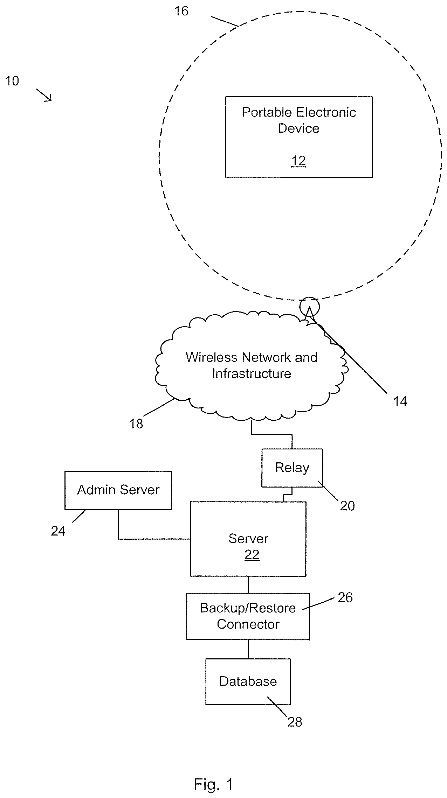

Referring to Figure 1, a functional block diagram of a communication system 10 and a portable electronic device 12 is generally shown. The portable electronic device 12 and the communication system 10 are operable to effect communications over a radio communications channel therebetween.

For the purpose of illustration, the communication system 10 is functionally represented in Figure 1 and includes a base station 14. Base station 14 defines a coverage area, or cell 16 within which communications between the base station 14 and the portable electronic device 12 can be effected. It will be appreciated that the portable electronic device 12 is movable within cell 16 and can be moved to coverage areas defined by other cells, including those that are not illustrated in the present example.

The base station 14 is part of a wireless network and infrastructure 18 that provides a link to the portable electronic device 12. The wireless network and infrastructure 18 includes additional base stations (not shown) that provide the other cells referred to above. Data is delivered to the portable electronic device 12 via wireless transmission from base station 14. Similarly, data is sent from the portable electronic device 12 via wireless transmission to the base station 14.

Wireless networks and infrastructures include, for example, data-centric wireless networks, voice-centric wireless networks, or dual-mode wireless networks. For the purpose of the present exemplary embodiment, the wireless network and infrastructure 18 includes a dual-mode wireless network that supports both voice and data communications over the same physical base stations.

The communication system 10 further includes a relay device 20 that is connected to the wireless network and infrastructure 18 and to a server 22. It will be understood that the functions provided by the relay device 20 and the server 22 can be embodied in the same device. The server 22 is also connected to an administration server 24, as shown. The administration server 24 provides administrative services to and control over the server 22.

The server 22 is also functionally coupled through a connector 26 to a backup/restore database 28. Other connectors and databases can be provided, for example, for synchronization purposes. The connector 26 receives commands from the server 22. It will be understood that the connector 26 is a functional component and can be provided by way of an application on the server 22. The backup/restore database 28 is used for storing data records, including, for example, copies of Short Message Service (SMS) or Personal Identification Number (PIN) messages sent from the portable electronic device 12.

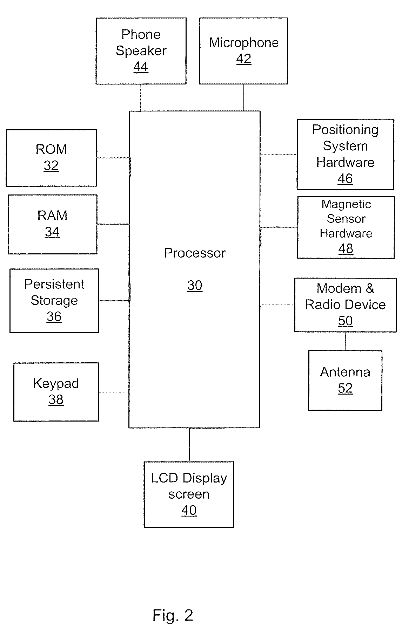

Referring now to Figure 2, a block diagram of certain components within the portable electronic device 12 is shown. In the present embodiment, the portable electronic device 12 is based on the computing environment and functionality of a wireless personal digital assistant (PDA). It will be understood, however, that the portable electronic device 12 is not limited to a wireless personal digital assistant. Other portable electronic devices are possible, such as cellular telephones, smart telephones, and laptop computers. Referring again to the present embodiment, the portable electronic device 12 is based on a microcomputer including a processor 30 connected to a read-only-memory (ROM) 32 that contains a plurality of applications executable by the processor 30 that enables the portable electronic device 12 to perform certain functions including, for example, PIN message functions, SMS message functions and cellular telephone functions. The processor 30 is also connected to a random access memory unit (RAM) 34 and a persistent storage device 36 which are responsible for various non-volatile storage functions of the portable electronic device 12. The processor 30 receives input from various input devices including a keypad 38. The processor 30 outputs to various output devices including an LCD display screen 40. A microphone 42 and phone speaker 44 are connected to the processor 30 for cellular telephone functions. The processor 30 is also connected to positioning system hardware 46, magnetic sensor hardware 48 and a modem and radio device 50. The modem and radio device 50 is used to connect to wireless networks using an antenna 52. The modem and radio device 50 transmits and receives voice and data communications to and from the portable electronic device 12 through the antenna 52.

The portable electronic device 12 is operable to effect two way communication of voice and data. Thus, the portable electronic device 12 transmits and receives voice and data communications over the wireless network and infrastructure 18 via wireless communications with the base station 14 over a radio communications channel.

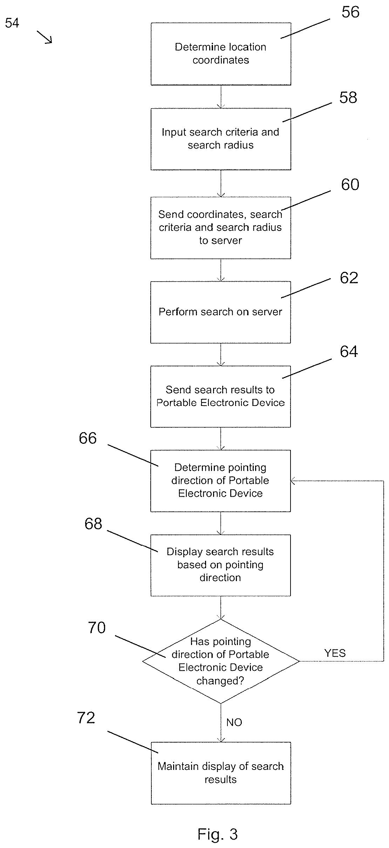

Referring to Figures 3, 4 and 5, operation of a sorting system 54 for the portable electronic device 12 is generally shown. The geographical location of the portable electronic device 12 is first determined at step 56 by a receiver (not shown), which is included in the positioning system hardware 46. The receiver uses Global Positioning System (GPS) or Assisted GPS technology to determine the geographical location coordinates of the portable electronic device 12 in a manner that is well known in the art and therefore will not be described further here. The geographical location coordinates may alternatively be determined using another suitable type of positioning technology, such as signal strength from base stations, for example.

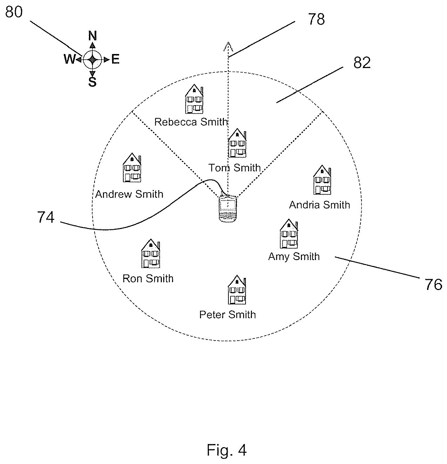

At step 58, a user inputs search criteria and a search radius into the portable electronic device 12. This is generally performed using the keypad 38, however, another input means, such as a touch sensitive screen having character recognition capability, for example, may be used. Types of search criteria include a last name for a telephone number search or a category such as "restaurants" or "medical clinics", for example. As shown in Figure 4, the search radius that is input by the user is measured from the geographical location of the portable electronic device 12 and defines a circular area 76 within which the search is conducted. The user may set the search radius to a default value in order to avoid having to input this value every time a search is performed. It will be appreciated that step 58 may be performed before, after or at the same time as step 56.

At step 60, the geographical location coordinates of the portable electronic device 12, the search criteria and the search radius are sent to the server 22 through the wireless network and infrastructure 18, as previously described. A search is then performed by the server 22 in a records database, which includes records that are mapped to geographical locations, as indicated at step 62. The search results are then returned to the portable electronic device 12 at step 64.

The records database includes information relating to categories such as residences, businesses, government offices and/or landmarks, for example. A record for a restaurant may include: the name of the restaurant, the address of the restaurant, the phone number of the restaurant, the type of food served, and the geographical location coordinates associated with the restaurant. Records databases that are suitable for use with the present embodiment may be licensed from several different companies, including Navteq™, for example.

In the present embodiment, the server 22 is in communication with at least one records database. The records database may be a separate database or may be incorporated into the backup/restore database 28.

At step 66, a pointing direction 78 of a forward end 74 of the portable electronic device 12 is determined. The magnetic sensor hardware 48 includes an electronic compass (not shown) for providing the direction information. As shown in Figure 4, the pointing direction 78 is north, as indicated by north arrow 80. The pointing direction 78 is used to define a search area within the circular area 76 for which results are desired. In this embodiment, the search area is a sector 82 of the circular area 76. The sector size is generally a default value, such as 45° on either side of the pointing direction, for example. The sector size may alternatively be specified by the user at the time of each new search.

In one embodiment, the electronic compass includes magnetic sensor HMC1041Z, which is manufactured by Honeywell. Other suitable magnetic sensors manufactured by Honeywell or other manufacturers may alternatively be used.

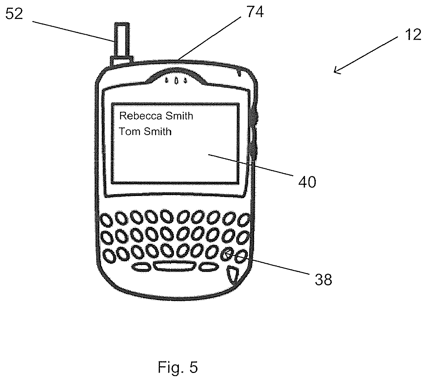

The search results are then displayed on the portable electronic device 12 based on the pointing direction 78, as indicated at step 68. In the example of Figures 4 and 5, a search was performed to retrieve records of persons having the last name "Smith". As shown in Figure 4, the search results returned a total of seven records, however, only two records, specifically "Rebecca Smith" and "Tom Smith", are located within the sector 82. Therefore, as shown in Figure 5, only those two records are displayed on the LCD display screen 40 for the user to view.

The magnetic sensor hardware 48 provides the portable electronic device 12 with continuous updates of the pointing direction 78. If the pointing direction 78 changes, as indicated at step 70, steps 66 and 68 are repeated as shown in Figure 3. If a new search area, which is defined by a new pointing direction, does not include the locations of the records: "Rebecca Smith" and "Tom Smith", these records will no longer be displayed. Instead, records that are located within the new search area will be displayed. If the pointing direction 78 does not change, the original display will be maintained, as indicated at step 72.

Displaying results within a search area that is determined based on the pointing direction 78 of a user's portable electronic device 12 is particularly useful for a user who is driving down a one-way street or for a user who is on his/her way to another destination and wishes to find a restaurant, for example, that is on the way without having to backtrack. In addition, by knowing only the general direction in which a desired search result is located, a user is able to greatly reduce the number of hits returned by a search.

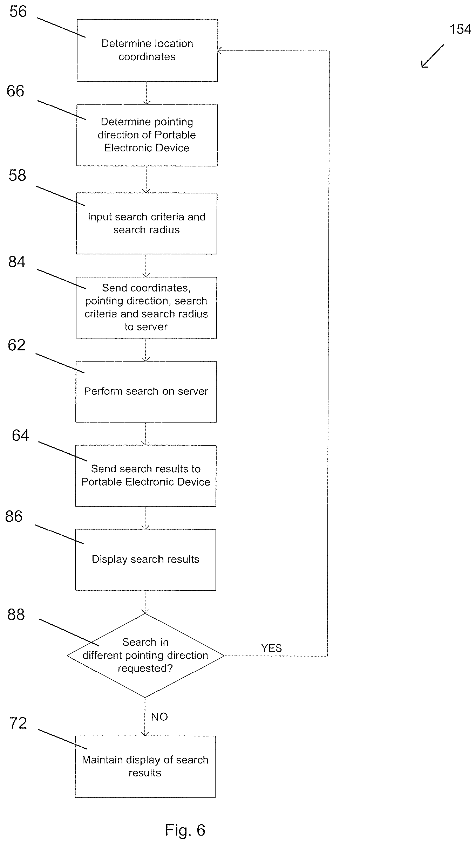

Operation of another embodiment of a sorting system 154 is shown in Figure 6. This embodiment is similar to the embodiment of Figure 3, however, the pointing direction 78, which is determined at step 66, is sent to the server 22 along with the geographical location coordinates, the search criteria and the search radius, as indicated at step 84. Thus, the search results that are returned to the portable electronic device 12 and then displayed at step 86 are limited to records that are located within the search area, which is defined by the pointing direction 78. If results from another search area are desired, as indicated at step 88, then a new search is performed starting at step 56, otherwise the results are maintained on the display screen 40, as indicated at step 72.

In another embodiment, the search area is a rectangle rather than a sector 82. As such, the width of the search area will remain constant as the distance from the portable electronic device 12 increases.

In yet another embodiment, the records database is stored locally on the portable electronic device 12. Therefore, no data is sent to or from the server 22 and the search is performed locally on the portable electronic device 12. Once the search has been completed, the results are displayed on the screen 40 for the user to view.

A specific embodiment has been shown and described herein. However, modifications and variations may occur to those skilled in the art. For example, the shape of the search area is not limited to being a sector or a rectangle, any suitable shape may be used.

## Claims

1. A method of providing search results on a portable electronic device (12) comprising:
determining (56) geographical coordinates of said electronic device;
receiving (58) a user input search criteria provided via a user interface of the electronic device,
transmitting the geographical coordinates and search criteria to a server;
receiving (64) search results of a search performed on the server, the search based on the geographical coordinates, search criteria, and a geographic search area from the geographical coordinates;
determining (66) a pointing direction (78) of said electronic device using magnetic sensor hardware associated with the electronic device;
limiting, on the electronic device, the received results to a subset of records that are associated with a location within a results search area that is defined by the pointing direction of said electronic device; and
displaying (68) the subset of records on a display screen of the electronic device.

2. A method as claimed in claim 1, wherein an input means for receiving the user input search criteria is a keypad (38).

3. A method as claimed in any one of the preceding claims, wherein an input means of the electronic device for receiving the user search criteria is a touch sensitive screen having character recognition capability.

4. A method as claimed in any one of the preceding claims, wherein the portable electronic device includes a positioning system hardware (46) for determining the geographical coordinates of the electronic device.

5. A method as claimed in claim 4, wherein the magnetic sensor hardware associated with the electronic device is not coupled to the positioning system hardware.

6. A method as claimed in any one of claims 4-5, wherein the positioning system hardware comprises a satellite navigation system.

7. A method as claimed in any one of the preceding claims, wherein the geographic search area is defined by a search radius.

8. A method as claimed in claims 7, wherein the search radius has a predetermined value or the radius is received by the user input.

9. A method as claimed in any one of claims 7-8, wherein the geographic search area is an area within a circle (76) having an origin (74) at the geographical coordinates of the portable electronic device and having a radius equal to the search radius.

10. A method as claimed in any one of claims 7-9, wherein the geographic search area is a sector (82) of a circle having a radius equal to the search radius and being bisected by the pointing direction.

11. A method as claimed in any one of the preceding claims, wherein the geographic search area is a rectangle.

12. A portable electronic device configured to perform the method of any one of claims 1 to 11.

13. A computer program product for providing search results on a portable electronic device comprising a computer readable medium embodying program code means executable in a computing device, system or apparatus for implementing the method of any one of claims 1 to 10.

## Patentansprüche

1. Verfahren zum Bereitstellen von Suchergebnissen auf einer tragbaren elektronischen Vorrichtung (12), umfassend:
Ermitteln (56) von geografischen Koordinaten der elektronischen Vorrichtung;
Empfangen (58) von durch den Benutzer eingegebenen Suchkriterien, die über eine Benutzeroberfläche der elektronischen Vorrichtung bereitgestellt werden,
Senden der geografischen Koordinaten und der Suchkriterien an einen Server;
Empfangen (64) der Suchergebnisse einer auf dem Server durchgeführten Suche, wobei die Suche auf den geografischen Koordinaten, den Suchkriterien und einem geografischen Suchbereich ausgehend von den geografischen Koordinaten basiert;
Ermitteln (66) einer Zeigerichtung (78) der elektronischen Vorrichtung unter Verwendung von magnetischer Sensorhardware, die zu der elektronischen Vorrichtung gehörig ist;
Begrenzen, auf der elektronischen Vorrichtung, der empfangenen Ergebnisse auf eine Untergruppe von Datensätzen, die zu einem Ort innerhalb eines Ergebnissuchbereichs gehörig sind, welcher durch die Zeigerichtung der elektronischen Vorrichtung definiert wird; und
Anzeigen (68) der Untergruppe von Datensätzen auf einem Anzeigebildschirm der elektronischen Vorrichtung.

2. Verfahren nach Anspruch 1, wobei ein Eingabemittel zum Empfangen der durch den Benutzer eingegebenen Suchkriterien ein Tastenfeld (38) ist.

3. Verfahren nach einem der vorhergehenden Ansprüche, wobei ein Eingabemittel der elektronischen Vorrichtung zum Empfangen der Benutzersuchkriterien ein berührungsempfindlicher Bildschirm mit Zeichenerkennungsfähigkeit ist.

4. Verfahren nach einem der vorhergehenden Ansprüche, wobei die tragbare elektronische Vorrichtung eine Positionsbestimmungssystem-Hardware (46) zum Ermitteln der geografischen Koordinaten der elektronischen Vorrichtung aufweist.

5. Verfahren nach Anspruch 4, wobei die zu der elektronischen Vorrichtung gehörige Magnetsensor-Hardware nicht mit der Positionsbestimmungssystem-Hardware gekoppelt ist.

6. Verfahren nach einem der Ansprüche 4 bis 5, wobei die Positionsbestimmungssystem-Hardware ein Satellitennavigationssystem umfasst.

7. Verfahren nach einem der vorhergehenden Ansprüche, wobei der geografische Suchbereich durch einen Suchradius definiert ist.

8. Verfahren nach Anspruch 7, wobei der Suchradius einen vorgegebenen Wert hat oder der Radius durch die Benutzereingabe empfangen wird.

9. Verfahren nach einem der Ansprüche 7 bis 8, wobei der geografische Suchbereich ein Bereich innerhalb eines Kreises (76) ist, der einen Ursprung (74) an den geografischen Koordinaten der tragbaren elektronischen Vorrichtung hat und der einen Radius gleich dem Suchradius hat.

10. Verfahren nach einem der Ansprüche 7 bis 9, wobei der geografische Suchbereich ein Sektor (82) eines Kreises ist, dessen Radius gleich dem Suchradius ist und der durch die Zeigerichtung zweigeteilt wird.

11. Verfahren nach einem der vorhergehenden Ansprüche, wobei der geografische Suchbereich ein Rechteck ist.

12. Tragbare elektronische Vorrichtung, die dafür konfiguriert ist, das Verfahren nach einem der Ansprüche 1 bis 11 durchzuführen.

13. Computerprogramprodukt zum Bereitstellen von Suchergebnissen auf einer tragbaren elektronischen Vorrichtung, das ein Computer-lesbares Medium aufweist, welches Programcodemittel enthält, die in einer Computervorrichtung, einem System oder einem Apparat ausführbar sind, um das Verfahren nach einem der Ansprüche 1 bis 10 zu implementieren.

## Revendications

1. Procédé de délivrance de résultats de recherche sur un dispositif électronique portable (12), comprenant :
la détermination (56) de coordonnées géographiques dudit dispositif électronique ;
la réception (58) d'un critère de recherche entré par un utilisateur délivré par l'intermédiaire d'une interface d'utilisateur du dispositif électronique ;
la transmission des coordonnées géographiques et du critère de recherche à un serveur ;
la réception (64) de résultats de recherche d'une recherche effectuée sur le serveur, la recherche étant basée sur les coordonnées géographiques, le critère de recherche, et une zone de recherche géographique à partir des coordonnées géographiques ;
la détermination (66) d'une direction de pointage (78) dudit dispositif électronique à l'aide d'un dispositif de capteur magnétique associé au dispositif électronique ;
la limitation, sur le dispositif électronique, des résultats reçus à un sous-jeu d'enregistrements qui sont associés à un emplacement à l'intérieur d'une zone de recherche de résultats qui est définie par la direction de pointage dudit dispositif électronique ; et
l'affichage (68) du sous-jeu d'enregistrements sur un écran d'affichage du dispositif électronique.

2. Procédé selon la revendication 1, dans lequel des moyens d'entrée pour recevoir le critère de recherche entré par un utilisateur sont un clavier (38).

3. Procédé selon l'une quelconque des revendications précédentes, dans lequel des moyens d'entrée du dispositif électronique pour recevoir le critère de recherche de l'utilisateur sont un écran sensible au toucher ayant une capacité de reconnaissance de caractères.

4. Procédé selon l'une quelconque des revendications précédentes, dans lequel le dispositif électronique portable comprend un dispositif de système de localisation (46) pour déterminer les coordonnées géographiques du dispositif électronique.

5. Procédé selon la revendication 4, dans lequel le dispositif de capteur magnétique associé au dispositif électronique n'est pas couplé au dispositif de système de localisation.

6. Procédé selon l'une quelconque des revendications 4 à 5, dans lequel le dispositif de système de localisation comprend un système de navigation par satellite.

7. Procédé selon l'une quelconque des revendications précédentes, dans lequel la zone de recherche géographique est définie par un rayon de recherche.

8. Procédé selon la revendication 7, dans lequel le rayon de recherche a une valeur prédéterminée, ou le rayon est reçu par l'entrée de l'utilisateur.

9. Procédé selon l'une quelconque des revendications 7 à 8, dans lequel la zone de recherche géographique est une zone à l'intérieur d'un cercle (76) comportant une origine (74) au niveau des coordonnées géographiques du dispositif électronique portable et ayant un rayon égal au rayon de recherche.

10. Procédé selon l'une quelconque des revendications 7 à 9, dans lequel la zone de recherche géographique est un secteur (82) d'un cercle ayant un rayon égal au rayon de recherche et qui a pour bissectrice la direction de pointage.

11. Procédé selon l'une quelconque des revendications précédentes, dans lequel la zone de recherche géographique est un rectangle.

12. Dispositif électronique portable configuré de façon à exécuter le procédé selon l'une quelconque des revendications 1 à 11.

13. Produit de programme informatique pour délivrer des résultats de recherche sur un dispositif électronique portable, comprenant un support lisible par un ordinateur mettant en ouvre des moyens formant code de programme exécutables dans un dispositif, un système ou un appareil informatique pour exécuter le procédé selon l'une quelconque des revendications 1 à 10.
